Europäisches Patentamt

European Patent Office

Office européen des brevets

(19)

(11) Numéro de publication: **0 242 273
B1**

(12) **FASCICULE DE BREVET EUROPEEN**

(45) Date de publication du fascicule du brevet:
08.08.90

(51) Int. Cl.⁵: **B25B 29/02**, F16B 33/02

(21) Numéro de dépôt: 87400779.2

(22) Date de dépôt: 07.04.87

(54) Dispositif de préhension pour mise en tension d'éléments de vissage.

(30) Priorité: 17.04.86 FR 8605552

(43) Date de publication de la demande:
21.10.87 Bulletin 87/43

(45) Mention de la délivrance du brevet:
08.08.90 Bulletin 90/32

(84) Etats contractants désignés:
BE CH DE ES GB IT LI NL SE

(56) Documents cités:
BE-A- 497 537
BE-A- 624 435
FR-A- 2 069 395
FR-A- 2 427 881
US-A- 2 349 651
US-A- 2 787 186
US-A- 2 870 668

(73) Titulaire: FRAMATOME, Tour Fiat 1, Place de la Coupole,
F-92400 Courbevoie(FR)

(72) Inventeur: Bourdonne, Jean-Claude, 9, Résidence du
Moranbeau, F-71670 Le Breuil(FR)

(74) Mandataire: Moncheny, Michel et al, c/o Cabinet
Lavoix 2 Place d'Estienne d'Orves, F-75441 Paris
Cedex 09(FR)

ACTORUM AG

## Description

La présente invention a pour objet un dispositif de préhension pour la mise en tension d'éléments de vissage notamment de grandes dimensions.

Dans les installations industrielles mettant en oeuvre des éléments de vissage de grandes dimensions, on exerce, pendant les opérations de serrage et de desserrage, une traction sur lesdits éléments par l'intermédiaire d'un dispositif de tension, en vue de les maintenir en état de précontrainte.

C'est notamment le cas dans les réacteurs nucléaires, où un couvercle est fixé de manière amovible sur une cuve afin de permettre le rechargement périodique en combustible du réacteur et, à la faveur de celui-ci, une inspection de l'intérieur de la cuve.

A cet effet, le couvercle est fixé sur la cuve du réacteur par des goujons de grandes dimensions qui sont vissés dans la collerette de la cuve et qui pénètrent dans des trous lisses prévus dans la collerette du couvercle. Ces goujons sont généralement employés en assez grand nombre et relativement rapprochés les uns des autres, si bien que le démontage et le remontage du couvercle nécessitent le dévissage et le vissage de tous ces goujons et également leur mise en tension à chaque vissage et dévissage.

Cette mise en tension des goujons à chaque vissage et dévissage est généralement assurée par un ensemble de vérins qui exercent un effort de traction sur chaque goujon par l'intermédiaire d'une pièce de prise constituée par exemple par un écrou ou une mâchoire de préhension disposée sur l'extrémité libre du goujon.

On connaît différents dispositifs dont le but commun est de pouvoir assurer aux filets une contrainte uniforme et d'équilibrer la répartition des contraintes.

Le FR-A-2.069.395 décrit un système de filetage pour structure d'obturation à vis destinée à des récipients haute pression dans lesquels un élément fileté d'obturation est vissé dans un élément fileté associé du récipient, au moins l'un de ces éléments comprenant un filetage ayant des fonds de filet et des dégagements associés les prolongeant. Ces dégagements sont orientés radialement depuis les extrémités intérieures des fonds de filet, et séparent les filets jointifs l'un de l'autre, la profondeur radiale de ces dégagements, en direction de l'extrémité de filetage la plus voisine de l'intérieur du récipient, augmentant sensiblement de manière parabolique.

Cette construction connue présente cependant l'inconvénient que les dégagements à fond de filet, variant selon une courbe parabolique, affaiblissent la vis dans sa section résistante à la traction.

On connaît également dans le FR-A-2.427.881, un dispositif de serrage dont la particularité principale est que le profil d'accrochage est composé, sur la demi-hauteur supérieure, de dents ayant un pas et un diamètre à fond de gorge constant, les dents suivantes ayant un pas et un diamètre de gorge échelonnés. Ce dispositif comporte un élément de vissage comportant à son extremité libre un profil extérieur à dents complémentaires au profil intérieur à dents d'un organ de prise.

De ce fait, il paraît difficile de pouvoir obtenir une répartition uniforme de l'effort de traction sur les dents et de plus, l'usinage d'un pas variable et à profil évolutif est très coûteux.

Le but de la présente invention est donc de proposer un dispositif qui soit de conception simple et d'une mise en oeuvre aisée et qui, lors de la mise en tension de l'élément de vissage, améliore la répartition des efforts exercés dans l'assemblage.

Suivant l'invention le dispositif de mise en tension d'un élément comprend un élément de vissage comportant à son extrémité libre un profil extérieur à dents de pas constant ayant sur toute sa longueur filetée un diamètre de fond généré par un tronc de cône et une génératrice du diamètre extérieur parallèle à l'axe de l'élément de vissage; un organe de prise de l'élément de vissage comportant un profil intérieur à dents de section constante et de pas constant légèrement supérieur au pas du profil extérieur de l'élément de vissage et complémentaire au profil extérieur de l'élément de vissage, l'organe de prise étant sur toute sa longueur filetée généré sur un alésage conique de même conicité que le diamètre de fond du profil extérieur de l'élément de vissage; et un système (1) de mise en tension de l'élément de vissage agissant sur l'organe de prise par l'intermédiaire d'un zone d'appui qui transmet les efforts, située sur la partie périphérique de l'organe de prise.

Afin de bien faire comprendre l'invention, on va maintenant décrire, en se référant aux figures jointes en annexe, deux modes de réalisation du dispositif suivant l'invention.

La figure 1 est une demi-vue en plan du dispositif vis-écrou à filet hélicoïdal conforme à l'invention.

La figure 1a est une vue à plus grande échelle d'un filet du dispositif vis-écrou.

La figure 2 est une demi-vue en plan d'un dispositif à cannelures et mâchoire conforme à l'invention.

La figure 2a est une vue à plus grande échelle d'une cannelure du dispositif à cannelures et machoire.

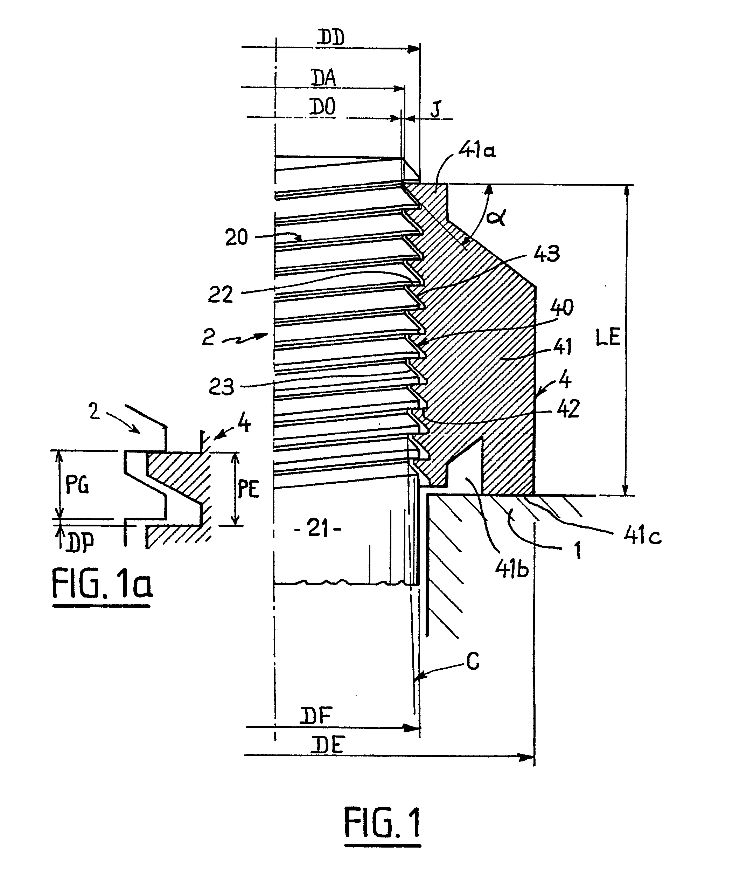

Sur la figure 1, on a représenté un dispositif de préhension pour la mise en tension d'un élément de vissage formé par un goujon 2 dont l'extrémité libre est extérieurement munie d'un filetage hélicoïdal 20. Sur le filetage 20 du goujon 2 est vissé un organe de prise constitué par un écrou 4 comportant intérieurement un filetage hélicoïdal 40.

L'écrou 4 repose sur une pièce formant appui et constituée par un vérin d'un système de mise en tension du goujon 2.

Cet écrou 4 permet de faire transiter l'effort de traction exercé par la pièce 1 sur le corps 21 du goujon 2 au travers de son extrémité de préhension et au travers de l'écrou 4 par les N filets et cela de façon la plus uniforme possible.

A cet effet, l'écrou 4 est constitué d'un corps cylindrique 41 de diamètre extérieur DE et comportant à son extrémité supérieure une partie 41a amincie se raccordant au corps 41 par un tronc de cône. D'autre part, le corps 41 de l'écrou 4 comporte également à son extrémité inférieure une partie amincie formée par une gorge annulaire 41b se raccordant audit corps 41 par un fond incliné ou de forme arrondie. Cette extrémité inférieure détermine une surface de référence d'appui 41c légèrement en saillie pour le système de mise en tension du goujon 2.

Le filet 20 prévu à l'extrémité libre du goujon 2 à tensionner est généré par un tronc de cône de petit diamètre au sommet DO et de conicité C.

Le profil du filet 20 est trapézoïdal et la face d'appui 22 dudit filet est construite à partir d'une génératrice perpendiculaire à l'axe du goujon 2, décrivant une surface hélicoïdale au pas PG et s'appuyant sur le cône de base de diamètre au sommet DO et de conicité C.

La face supérieure 23 du filet 20 est construite à l'aide d'une génératrice inclinée d'un angle par rapport à l'axe du goujon 2 et elle s'appuie sur le cône de diamètre DO et de conicité C. Cette face 23 du filet 20 décrit aussi une surface hélicoïdale au pas PG.

Le sommet du filet 20 ainsi généré est tronqué par un cylindre de diamètre DF égal au diamètre du corps 21 du goujon 2, ceci afin d'augmenter la flexion des filets de l'écrou 4.

Le filet 40 de l'écrou de préhension 4 qui se visse sur l'extrémité du goujon 2 est généré sur un tronc de cône de petit diamètre au sommet DA et de conicité C, tel que DA soit plus grand que DO. Le profil du filet 40 est trapézoïdal et la face d'appui 42 dudit filet décrit une surface hélicoïdale au pas PE s'appuyant sur le cône de base de diamètre au sommet DA et de conicité C.

La face inférieure 43 du filet 40 est construite à l'aide d'une génératrice inclinée d'un même angle et elle s'appuie sur le cône de diamètre DA et de conicité C. Cette face 43 décrit aussi une surface hélicoïdale au pas PE.

Un jeu fonctionnel J est ménagé entre le filet 20 du goujon 2 et le filet 40 de l'écrou 4 pour permettre le vissage de celui-ci et tolérer une incertitude de position de l'écrou par rapport au goujon au maximum d'un tour.

L'écart DP (figure 1a) entre le pas PE du filet 40 de l'écrou 4 et le pas PG du filet 20 du goujon 2, tel que DP = PE - PG, est déterminé en fonction de la géométrie du système et de la répartition des efforts souhaitée sur les filets en appui et des contraintes.

Le diamètre DA du sommet du tronc de cône "alésage" de l'écrou 4 est déterminé en fonction du jeu J et de l'écart de position d'un tour, et le diamètre DD du sommet du tronc de cône à fond de filet de l'écrou 4 est déterminé en fonction du pas PE et du jeu J entre filets.

La longueur LE de l'écrou 4 est fonction de l'effort à répartir donc du nombre de filets N en prise, soit LE = N x PG.

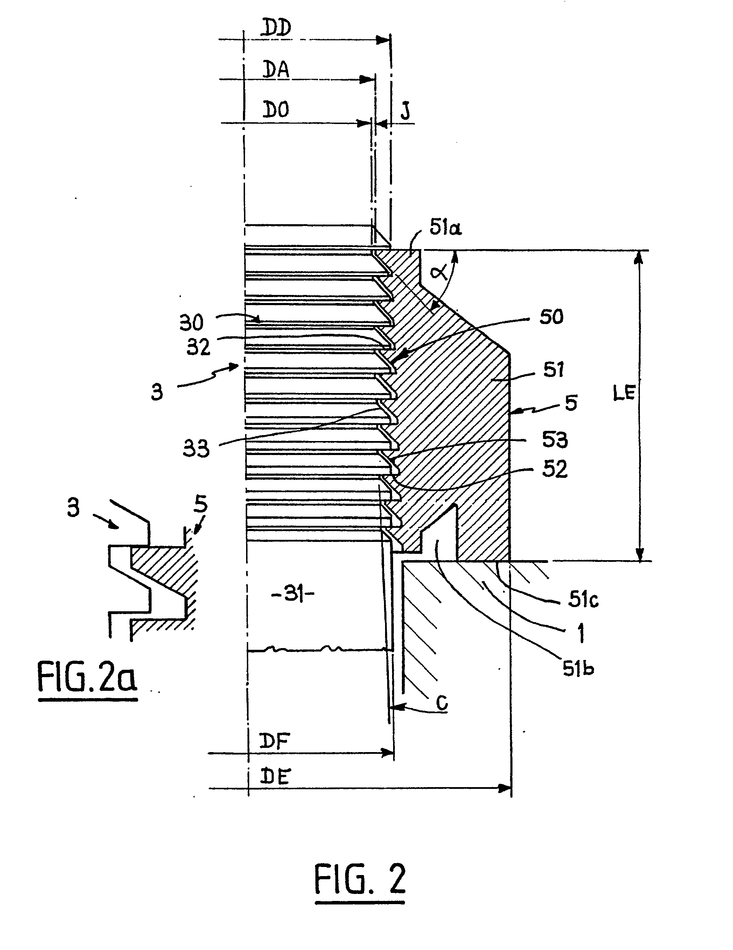

Dans le cas d'un dispositif à cannelures et mâchoire, comme représenté à la figure 2, l'extrémité libre du goujon 3 à tensionner est munie extérieurement de cannelures 30 générées sur un tronc de cône de petit diamètre au sommet DO et de conicité C.

Le profil des cannelures 30 de pas PG est trapézoïdal et la face d'appui de chaque cannelure du goujon 3 est construite à partir d'une génératrice perpendiculaire à l'axe dudit goujon décrivant un plan et s'appuyant sur le cône de petit diamètre au sommet DO et de conicité C.

La face supérieure 33 de chaque cannelure 30 est construite à l'aide d'une génératrice inclinée d'un angle par rapport à l'axe du goujon 3 et elle s'appuie sur le cône de diamètre DO et de conicité C. Cette face 33 décrit ainsi un tronc de cône d'axe commun avec celui du goujon 3, ceci afin d'augmenter la flexion des cannelures de la mâchoire.

Le sommet des cannelures 30 ainsi générées est tronqué par un cylindre de diamètre DF égal au diamètre du corps 31 du goujon 3.

La mâchoire de préhension 5 qui enserre l'extrémité cannelée du goujon 3 est en plusieurs parties et comporte, comme pour l'écrou 4 de l'exemple précédent, à son extrémité supérieure, une partie 51a amincie se raccordant au corps 51 de ladite mâchoire par un tronc de cône. D'autre part, la mâchoire 5 comporte également à son extrémité inférieure une partie amincie formée par une gorge annulaire 51b se raccordant au corps 51 par un fond incliné ou de forme arrondie. Cette extrémité inférieure détermine une surface de référence d'appui 51c légèrement en saillie pour le système de mise en tension du goujon 3.

La mâchoire de préhension 5 de diamètre extérieur DE est munie intérieurement de cannelures 50 générées par un tronc de cône de petit diamètre au sommet DA et de conicité C, de telle manière que DA soit supérieure à DO. Le pas PE des cannelures 50 de la mâchoire 5 est différent du pas PG du goujon 3 pour que l'on ait PE PG.

Le profil des cannelures 50 est trapézoïdal et la face d'appui 52 desdites cannelures est générée de manière identique à la face d'appui 32 des cannelures 30 du goujon 3. Il en est de même pour la face inférieure 53 des cannelures 50 qui est générée avec le même angle et de manière identique à la face supérieure 33 des cannelures 30 du goujon 3.

Un jeu fonctionnel J est ménagé entre les cannelures 30 du goujon 3 et les cannelures 50 de la mâchoire 5 pour permettre le montage de celle-ci et tolérer une incertitude de position de la mâchoire par rapport au goujon d'une cannelure, donc d'un pas.

L'écart DP (figures 2a) entre le pas PE des cannelures 50 de la mâchoire 5 et le pas PG des cannelures 30 du goujon 3, tel que DP = PE - PG, est déterminé en fonction de la géométrie du système et de la répartion des efforts souhaitée sur les cannelures en appui et des contraintes.

Le diamètre DA du sommet du tronc de cône "alésage" de la mâchoire 5 est déterminé en fonction du jeu J et de l'écart de position d'un tour, et le diamètre DD du sommet du tronc de cône à fond de gorge des cannelures 50 de la mâchoire 5 est déterminé en fonction du pas PE et du jeu J entre cannelures.

La longueur LE de la mâchoire est fonction de l'effort à répartir donc du nombre de cannelures N en prise, soit LE = N x PG.

La forme de l'organe de prise constitué par l'écrou 4 ou la mâchoire 5 permet de faire transiter l'effort de traction exercé sur le corps du goujon au travers de son extrémité de préhension et au travers dudit organe de prise par les N filets ou cannelures de façon la plus uniforme possible. La mise en tension du goujon 2 ou 3 se faisant progressivement par le vérin 1 prévu à cet effet, c'est d'abord le filet ou la cannelure situé à la partie supérieure du dispositif de préhension qui subit l'effort de traction de valeur faible à ce moment, puis au fur et à mesure de la mise en tension, chaque filet ou cannelure reprend une partie de l'effort dans l'ordre successif allant de la partie supérieure à la partie inférieure. A la fin de la mise en tension, l'effort de traction est pratiquement uniformément réparti, la variation autour de la répartition uniforme étant due aux tolérances de fabrication des pas respectifs du goujon 2 ou 3 et de l'écrou 4 ou de la mâchoire 5.

L'amincissement des extrémités de l'organe de prise 4 ou 5 facilite la flexion des filets ou des cannelures situés dans ces zones, ceci lié à la différence de pas entre le goujon et l'organe de prise ce qui améliore la distribution des efforts au travers de la fonction goujon-organe de prise.

Le fait de faire porter l'appui sur la périphérie de l'écrou 4 ou de la mâchoire 5, permet de ne pas influencer les filets ou cannelures situées à la partie inférieure de l'écrou ou de la mâchoire par des efforts d'appui induisant des flexions et cisaillements parasites gênant la libre déformation de ces filets ou cannelures.

La section d'appui de l'écrou ou de la mâchoire est suffisante pour assurer le bon fonctionnement du système en limitant la contrainte moyenne de mâtage à une valeur nettement inférieure à la limite élastique.

Ce dispositif qui est de conception simple et de mise en oeuvre aisée présente de nombreux avantages.

Tout d'abord, il permet d'avoir une section du noyau du goujon maxima dans la zone d'efforts de traction et par conséquent un diamètre du corps du goujon plus petit à contraintes égales à fond de noyau. De plus, on obtient une répartition homogène de l'effort de traction sur les filets ou cannelures en jouant sur la plus grande flexion des derniers filets de l'écrou ou des dernières cannelures de la mâchoire, et en jouant sur la différence de pas entre le filet du goujon et de l'écrou, ou entre les cannelures du goujon et de la mâchoire.

Par ailleurs, ce dispositif permet d'éviter un usinage très coûteux tel que celui nécessité par les systèmes à pas variable ou à profil évolutif ou par des systèmes à filets ou cannelures générés sur une surface de révolution ni cylindrique ni conique.

Enfin, l'ensemble vis-écrou permet une incertitude de position de l'écrou par rapport au goujon, de zéro à un pas, et l'ensemble cannelures et mâchoire tolère un écart de position d'un pas.

Le dispositif suivant l'invention s'applique non seulement aux centrales nucléaires, mais également aux installations pétrolières et pétrochimiques, aux installations minières, ou encore pour la fermeture de turbines, vannes hydrauliques, conduites sous pression ou corps de vannes. De façon générale, le dispositif suivant l'invention s'applique dans le cas de nombreuses installation industrielles mettant en oeuvre des éléments de vissage de grandes dimensions.

## Revendications

1. Dispositif de mise en tension d'un élément comprenant un élément de vissage (2, 3) comportant à son extrémité libre un profil extérieur (20, 50) à dents de pas constant ayant sur toute sa longueur filetée un diamètre de fond généré par un tronc de cône et une génératrice du diamètre extérieur parallèle à l'axe de l'élément de vissage; un organe de prise (4, 5) de l'élément de vissage (2, 3) comportant un profil intérieur (40, 50) à dents de section constante et de pas constant légèrement supérieur au pas du profil extérieur de l'élément de vissage (2, 5) et complémentaire au profil extérieur de l'élément de vissage, l'organe de prise (4, 5) étant sur toute sa longueur filetée généré sur un alésage conique de même conicité que le diamètre de fond du profil extérieur (20, 30) de l'élément de vissage; et un système (1) de mise en tension de l'élément de vissage (2, 3) agissant sur l'organe de prise (4, 5) par l'intermédiaire d'un zone d'appui (41c, 51c) qui transmet les efforts, située sur la partie périphérique de l'organe de prise (4, 5).

2. Dispositif selon la revendication 1, caractérisé en ce que le profil extérieur (20) de l'élément de vissage (2) et le profil intérieur (40) de l'organe de prise (4) sont formés par une rampe hélicoïdale.

3. Dispositif selon la revendication 1, caractérisé en ce que le profil extérieure (30) de l'élément de vissage (3) et le profil intérieur (50) de l'organe de prise (5) sont formés par des cannelures cylindriques.

4. Dispositif selon la revendication 1, caractérisé en ce que la zone d'appui (41c, 51c) de l'organe de prise (4, 5) est limitée par une gorge annulaire (41b, 51b) comportant un fond incliné ou de forme arrondie.

## Patentansprüche

1. Vorrichtung zum Spannen eines Elementes mit einem Schraubteil (2, 3), welches an seinem freien Ende ein Außenprofil (20, 50) mit Zähnen mit konstantem Abstand aufweist, wobei dieses Außenprofil über seine gesamte Profillänge einen Grunddurchmesser in Form eines Kegelstumpfes sowie eine Mantellinie des Außendurchmessers parallel zur Achse des Schraubteils aufweist, und wobei ein Aufnahmeteil (4, 5) für das Schraubteil (2, 3) ein Innenprofil (40, 50) mit Zähnen konstanten Querschnitts und Abstands aufweist, wobei deren Abstand etwas größer als der Abstand der Zähne des Außenprofils des Schraubelements (2, 5) und wobei das Profil komplementär zu dem Außenprofil des Schraubelements ist, wobei das Aufnahmeteil (4, 5) sich über seine gesamte Profillänge auf einer konischen Bohrung derselben Konizität befindet wie der Grunddurchmesser des Außenprofils (20, 30) des Schraubelementes; und mit einer Einrichtung (1) zum Spannen des auf das Aufnahmeteil (4, 5) über einen Anlagebereich (41c, 51c) einwirkenden Schraubteiles (2, 3), wobei dieser die Kräfte übertragende Anlagebereich sich am Umfang des Aufnahmeteils (4, 5) befindet.

2. Vorrichtung nach Anspruch 1, dadurch gekennzeichnet, daß das Außenprofil (20) des Schraubteils (2) und das Innenprofil (40) des Aufnahmeteils (4) in Form einer schraubenförmigen Steigung ausgebildet sind.

3. Vorrichtung nach Anspruch 1, dadurch gekennzeichnet, daß das Außenprofil (30) des Schraubteils (3) und das Innenprofil (50) des Aufnahmeteils (5) in Form von Zylindernuten ausgebildet sind.

4. Vorrichtung nach Anspruch 1, dadurch gekennzeichnet, daß der Anlagebereich (41c, 51c) des Aufnahmeteils (4, 5) durch eine Ringnut (41b, 51b) mit abgeschrägtem oder abgerundetem Boden begrenzt ist.

**Claims**

1. Device for tensioning an element comprising a screwing element (2, 3) which has at its free end an outer profile (20, 50) with teeth of constant pitch, which has over the entire length of the thread a base diameter generated by a truncated cone and a generatrix of the outer diameter parallel to the axis of the screwing element; an engaging member (4, 5) of the screwing element (2, 3) having an inner profile (40, 50) with teeth of constant cross section and a constant pitch slightly greater than the pitch of the outer profile of the screwing element (2, 5) and matching the outer profile of the screwing element, the engaging member (4, 5) being generated, over the entire length of the thread, on a conical bore of the same conicity as the base diameter of the outer profile (20, 30) of the screwing element; and a tensioning system (1) for the screwing element (2, 3) acting on the engaging member (4, 5) via a bearing zone (41c, 51c) which transmits the forces and which is located on the peripheral part of the engaging member (4, 5).

2. Device according to claim 1, characterised in that the outer profile (20) of the screwing element (2) and the inner profile (40) of the engaging member (4) are formed by a helical ramp.

3. Device according to claim 1, characterised in that the outer profile (30) of the screwing element (3) and the inner profile (50) of the engaging member (5) are formed by cylindrical grooves.

4. Device according to claim 1, characterised in that the bearing zone (41c, 51c) of the engaging member (4, 5) is limited by an annular groove (41b, 51b) having a sloping or rounded bottom.

FIG.1a

FIG.1

EP 0 242 273 B1

FIG.2a

FIG. 2